# EUROPEAN PATENT APPLICATION

(11) **EP 4 850 967 A1**
(43) Date of publication of application: **09.12.2026**
(21) Application number: 25180484.5
(22) Date of filing: 03.06.2025
(51) Int. Cl.: B60L 50/64, H02M 1/00, H02M 7/42, H02M 7/66

(54) **METHOD FOR OPERATING AN INVERTER UNIT FOR A VEHCILE, DATA PROCESSING APPARATUS, COMPUTER PROGRAM, COMPUTER-READABLE STORAGE MEDIUM, BATTERY SYSTEM, DRIVE TRAIN FOR AN VEHICLE, AND VEHICLE**

(71) Applicant: Volvo Car Corporation, 405 31 Göteborg (SE)
(72) Inventor: EKSTRÖM, Markus, 40531 Göteborg (SE)
(74) Representative: Kransell & Wennborg KB

(57) **Abstract**

The present disclosure relates to a method for operating an inverter unit (36) for enabling an alternating current (AC) having a current amplitude and a current phase. The method comprises: obtaining first data (FD) indicative of a sinusoidal voltage to be enabled by the inverter unit (36), obtaining second data (SD) indicative of a parameter of the alternating current (AC) actually enabled by the inverter unit (36), and providing a voltage reference (VR) to the inverter unit (36) based on the obtained first data (FD) and the obtained second data (SD). The present disclosure further relates to a data processing apparatus (18), a computer program (26), a computer-readable storage medium (24), a battery system (14), a drive train (12) for a vehicle (10) and a vehicle (10).

## Description

### TECHNICAL FIELD

The present disclosure relates to a method for operating an inverter unit for a vehicle.

Additionally, the present disclosure relates to a data processing apparatus.

Moreover, the present disclosure relates to a computer program.

Furthermore, the present disclosure relates to a computer-readable storage medium.

In addition, the present disclosure relates to a battery system, a drive train for a vehicle, and a vehicle.

### BACKGROUND

Battery systems for vehicles are known in the prior art. They are typically used in a drivetrain of a battery electric vehicle or a hybrid electric vehicle to supply electric power to an electric traction machine for the propulsion of said vehicle. Furthermore, the electric power supplied by the battery system can also be used for other applications such as for powering an infotainment system, onboard lights and air conditioning of the vehicle. In sum, there are several electric loads in the vehicle which require electric power to fulfill their function.

At least some of the above loads require AC power. In particular, the electric traction machine, which is typically a three-phase electric machine, requires three phase AC power to operate.

In order to operate the electric traction machine effectively and efficiently, the AC power needs to be provided in a precise manner.

### SUMMARY

Thus, it is an objective of the present disclosure to ensure that AC power is provided SE:TOP to an electric machine in a precise manner.

The problem is at least partially solved or alleviated by the subject matter of the independent claims of the present disclosure, wherein further examples are incorporated in the dependent claims.

According to a first aspect, there is provided a method for operating an inverter unit for enabling an alternating current having a current amplitude and a current phase. The method comprises:
- obtaining first data indicative of a sinusoidal voltage to be enabled by the inverter unit,
- obtaining second data indicative of a parameter of the alternating current actually enabled by the inverter unit,
- providing a voltage reference to the inverter unit based on the obtained first data and the obtained second data.

In the context of the present disclosure, the inverter unit enables a voltage provided by the associated battery cells by operating a number of switches of the inverter unit accordingly. For example, the inverter unit, i.e. its switches, may be operated such that a sinusoidal voltage is enabled, wherein the sinusoidal voltage may be a pulse width modulated voltage. This enabled voltage leads to a current, in particular a sinusoidal current. It has been found that alternating electric current enabled by the inverter unit, e.g. for powering a three-phase electric machine and/or other loads may be subject to changes, e.g. due to environmental influences. These changes may comprise changes in a current amplitude and/or a current phase enabled by the inverter unit, i.e. enabled via the voltages enabled by the inverter unit. Moreover, electrical loads coupled to the battery system, i.e., to the inverter unit, for example, the electric three phase machine, are also affecting the current amplitude and/or a current phase of the alternating current, e.g. due to changing operational conditions. A change in current amplitude means that the amplitude of a sinusoidal current is not symmetrical and deviates from a desired amplitude. Additionally or alternatively, the current may be offset. This means that the oscillating current signal is shifted away from the desired base line, i.e., zero line. In other words, a sine waveform of the alternating current is shifted along the Y-axis representing the current. The aforementioned changes may be observed for one or more of the three phases of a three-phase AC current supplied, e.g., to the electric traction machine. These changes can cause reduced electrical performance of the electric machine and/or other electric components electrically coupled to the battery assembly. The idea of the present disclosure is to overcome these phenomena by providing a voltage reference to the inverter unit based on which the inverter unit adapts and/or corrects the alternating current actually enabled. In other words, the present disclosure provides a correction mechanism which is based on the first data and the second data as input data. As the second data refers to the alternating current actually enabled by the inverter unit, the method allows a real-time correction of the alternating current. It can therefore be ensured that the alternating current is constantly corrected based on the first data and the second data. Using the voltage reference provides a simple mechanism to reduce the changes of the phase current.

It is noted that the above method can be carried out by any standard computer. Thus, the method allows to operate the inverter unit in an efficient manner.

The term "inverter unit" used herein means an inverter unit suitable for use in an electric vehicle. Preferably, the inverter unit may be a "cell-level inverter unit" of a battery system for a vehicle. The cell-level inverter unit is an inverter unit which is configured to convert DC power from the battery system of the vehicle to AC power for the electric machine, if the electric machine is operated as a motor. In case the electric machine is operated as a generator, the cell-level inverter unit converts AC power generated by the electric machine into DC power for charging the battery system. For example, the cell-level inverter unit may be electrically coupled to one or more battery cells, the one or more battery cells may be electrically coupled in series with each other.

The cell-level inverter unit may be part of the battery system. The battery system comprises multiple cell-level inverter units coupled in series with each other. The cell-level inverter units coupled in series with each other may power one phase of an electric machine, e.g. one phase of a three-phase AC machine of a drivetrain of the vehicle. Typically, the battery system comprises three battery strings, each battery string may be configured to power one of the three-phases of electric three-phase AC machine of the electric vehicle. The method described in the first aspect may be applicable to each battery string.

The term "first data indicative of the sinusoidal voltage to be enabled by the inverter unit" used herein defines input data to be provided to the inverter unit. The first data comprises control information to be used by the inverter unit to enable the sinusoidal voltage. Based on the first data, the inverter unit is capable of providing alternating current having a current amplitude and a current phase by operating the switches of the inverter unit accordingly. In other words, the first data refers to a request to be sent to the inverter unit to control the inverter unit to enable sinusoidal voltage. Further alternatively, the first data describe a voltage reference for the inverter unit.

The "term second data indicative of a parameter of the alternating current actually enabled by the inverter unit" as used herein describes data associated with the alternating current which is generated following the operation of the inverter unit, i.e. by converting DC power from the battery system to AC power based on the first data. In other words, the second data refer to measurement data obtained from monitoring the alternating current actually enabled or caused by the inverter unit.

The term "voltage reference" used herein defines a voltage value indicative of a voltage to be provided by the inverter unit. Based on the voltage reference, the inverter unit may adapt its operation, i.e. the operation of its switches in order to meet the voltage reference.

The term "current phase" used herein refers to a position of a point in time and/or angle on a sinusoidal current enabled by the inverter unit.

The term "current amplitude" used herein refers to a maximum value of the sinusoidal current. For a sine wave, this is the maximum distance from the horizontal axis, i.e., zero line, to the peak of the sinusoidal current.

Preferably, the method according to the first aspect is carried out by a master control unit which is connected to one or more inverter units. The master control unit may send a request to the inverter unit comprising the first data. Further, the master control unit may monitor the alternating current actually enabled or caused by the inverter unit based on the request, thereby obtaining second data indicative of a parameter of the alternating current actually enabled by the inverter unit. Based on the obtained first data and the obtained second data the master control unit provides the voltage reference to the inverter unit. Based on the voltage reference, the inverter unit may adapt and/or correct its operation. Preferably, there may be one master control unit for all battery strings of the battery system, e.g. for all three battery strings. Alternatively, there may be one master control unit for each battery string.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to an example, the sinusoidal voltage to be enabled by the inverter unit is indicative of one or more of an associated amplitude, an associated angle, an associated time, an associated phase offset and an associated phase.

In other words, the sinusoidal voltage to be enabled by the inverter unit may be described or characterized by one or more of an associated amplitude, an associated angle, an associated time, an associated phase offset and an associated phase. These parameters, thus, may be considered to be control information based on which the inverter unit enables a sinusoidal voltage. In other words, based on the above parameters, the inverter unit is configured to provide AC power having a current amplitude and current phase.

The term "associated amplitude" used herein refers to a maximum value or a peak of the sinusoidal voltage, representing the height of the sinusoidal voltage from its horizontal axis to its peak.

The terms "associated phase" and "associated angle" used herein refer to the horizontal shift of the sinusoidal voltage along the time axis.

The term "associated phase offset" as used herein refers to the angular displacement between two waveforms of the same frequency, indicating how much one waveform is shifted in time relative to another. It is used to describe the relative timing between the peaks or zero crossings of the waveforms.

The term "associated time" as used herein refers to a time schedule along which the sinusoidal voltage of the inverter units is scheduled. In case of a plurality of inverter units, the associated may be indicative of a time schedule based on which the inverter units are synchronized.

According to an example, the parameter of the alternating current actually enabled by the inverter unit is an average current.

It has been found that the average current is a suitable indicator for determining an amplitude offset of the sinusoidal current of alternating current actually enabled by the inverter unit. For example, a sinusoidal current having a perfect sine wave form may exhibit a peak-to-peak distance from 100 mA to -100 mA. However, due to an amplitude offset in the sinusoidal current, the sinusoidal current may oscillate with a peak-to-peak distance between 75 mA and -125 mA. This would be an example of an amplitude offset. Such an offset may be denoted as change of the sinusoidal current of the alternating current of the inverter unit over time. The average current allows detecting such changes in an efficient and simple manner.

The term "average current" defines the average sum of the amplitudes of the sinusoidal current over a predefined time span. In the above example, the sum of 100 mA and -100 mA is 0 mA, thereby indicating no offset, whereas the sum of 75 mA and -125 mA is - 50 mA indicating an amplitude offset.

According to an example, the method further comprises correcting the first data by a voltage offset based on the average current in order to provide the voltage reference to the inverter unit.

In order to reduce undesired changes or deviations of the alternating current actually enabled by the inverter unit in a fast and efficient manner, the first data which is the input data for the inverter unit is simply corrected by using a voltage offset which is obtained based on the average current. In other words, the average phase current is used as a parameter to obtain a voltage offset which is used to alter the first data. To be specific, the first data may comprise the voltage amplitude which is corrected by the voltage offset to obtain an adapted and/or corrected voltage amplitude which is used by the inverter unit as input data to enable the alternating current.

According to an example, the method further comprises determining the voltage offset using a PI controller based on the average current and a predefined reference average current.

Using a PI controller provides a simple and efficient way to determine the voltage offset. The predefined reference average current may be a pre-stored value, for example, a pre-stored value of the master control unit. In other words, the PI controller uses the average current as input value and compares this value with the predefined reference average current and computes, based thereon, the voltage offset to be provided to the inverter unit. Thus, using the PI controller, a closed-loop control may be realized. Thus, the PI controller can continuously compare the average current with the predefined reference average value to obtain the voltage offset for correcting the first data which allows a real-time correction of the alternating current. The use of a PI controller is in particular of advantage, because it allows to obtain the voltage offset in a fast and simple manner.

According to an example, the predefined reference average current is zero.

Setting the predefined reference average current to zero is in particular of advantage because it allows to compute the voltage offset in a simple manner. In other words, the objective of the control is to eliminate any offset.

According to an example, the parameter of the alternating current actually enabled by the inverter unit is an amplitude.

In general, it is desirable that the actually enabled current has a desired or predefined amplitude. In a three-phase AC system it is preferred that all three-phase currents have the same current amplitude. Using such a balanced system allows to supply the three-phase electric machine in an efficient way. For example, a first sinusoidal current having a perfect sine wave form may have a peak-to-peak distance of 100 mA to -100 mA, i.e. an amplitude of 100mA, whereas a second sinusoidal current phase having a perfect sine wave form may have a peak-to-peak distance of 75 mA to -75 mA, i.e. an amplitude of 75 mA. Thus, the first sinusoidal current and the second sinusoidal current differ in their respective current amplitudes. This may also apply for a third sinusoidal current phase. Tracking the current amplitude of at least two sinusoidal currents of the three-phase AC current, preferably of all sinusoidal currents of the three-phase AC current, allows to detect such changes in an efficient and simple manner.

According to an example, the method further comprises correcting the first data by a scaling factor based on the amplitude in order to provide the voltage reference to the inverter unit.

It has been found that the current amplitude can be easily corrected by computing a scaling factor based on the amplitude in order to provide the voltage reference to the inverter unit. Thus, the difference in amplitude can be easily corrected by using the scaling factor with which the first data may be corrected and/or adjusted. Preferably, the first data comprises a voltage amplitude which can be corrected and/or adjusted based on the provided voltage reference, i.e., the scaling factor. In other words, by simply comparing the amplitudes of two sinusoidal currents with each other, the scaling factor can be computed. Preferably, the scaling factor is computed as a ratio between a first sinusoidal current and a second sinusoidal current. Thus, the scaling factor may be a dimensionless value. The scaling factor can be used as control information to adjust and/or correct the first data, in particular the voltage amplitude.

According to an example, the method further comprises determining the scaling factor using a PI controller based on the amplitude and a predefined reference amplitude.

The scaling factor can be determined in a simple manner by using a PI controller. It has been found that the PI controller is in particular of advantage to determine the scaling factor because the PI controller is a fast and efficient means for computing the scaling factor.

The predefined reference amplitude may be a pre-stored value, preferably a pre-stored value in the master control unit.

According to a second aspect, there is provided a data processing apparatus comprising means for carrying out the method of any one of the preceding examples.

In particular, the method according to the above examples can be carried out by any computer. This is because the computer only has to receive the first data and the second data to compute based thereon the voltage reference. Thus, no advanced technical equipment such as sensors or other electronic components are required. Preferably, the data processing apparatus may be the master control unit which is electrically coupled to one or more inverter units. The inverter unit and the master control unit may be part of the battery system of the vehicle. For example, the data processing apparatus may comprise a PI controller. Using the data processing apparatus according to the second aspect, it can be ensured that the alternating current enabled by the inverter unit is constantly corrected based on the first data and the second data. Using the voltage reference provides a simple mechanism to reduce the changes of the enabled current.

According to a third aspect, there is provided a computer program comprising instructions which, when the computer program is executed by a computer, cause the computer to carry out the method of the first aspect and the corresponding examples.

Using the computer program according to the third aspect, it can be ensured that the alternating current enabled by the inverter unit is constantly corrected based on the first data and the second data. Using the voltage reference provides a simple mechanism to reduce the changes of the enabled current.

According to a fourth aspect, there is provided a computer-readable storage medium comprising instructions which, when executed by a computer, cause the computer to carry out the method of the first aspect and the corresponding examples.

Using the computer-readable storage medium according to the fourth aspect, it can be ensured that the alternating current enabled by the inverter unit is constantly corrected based on the first data and the second data. Using the voltage reference provides a simple mechanism to reduce the changes of the enabled current.

According to a fifth aspect, there is provided a battery system comprising a plurality of battery units. Each battery cell unit comprises one or more battery cells and a cell-level inverter unit which is electrically connected to the one or more battery cells, and a data processing apparatus according to the second aspect. The data processing apparatus is communicatively coupled to at least one of the cell-level inverter units.

In other words, the data processing apparatus serves as a master control unit which is communicatively coupled with the one or more cell-level inverter units. The cell-level inverter unit may correspond to the inverter unit as mentioned in connection with the first aspect. The battery system according to the fifth aspect allows to provide alternating current from the one or more battery cell units according to the request of the data processing apparatus. To be specific, the data processing apparatus causes AC power enabled by the cell-level inverter units by providing the first data. Based on the first data, the cell-level inverter units are configured to enable alternating current from the respective battery cell unit by operating the switches of the cell-level inverter unit accordingly. Preferably, the battery system provides three-phase AC power. Each phase of the alternating current may be described by a parameter comprised by the second data which is monitored by the data processing apparatus. Based on the first data and the second data the data processing apparatus provides the voltage reference to the cell-level inverter units. Based on the voltage reference, the cell-level inverter unit may adjust and/or correct the first data received from the master control unit. Thus, it can be ensured that the alternating current enabled by the inverter unit is constantly corrected based on the first data and the second data. Using the voltage reference provides a simple mechanism to reduce the changes of the enabled current.

According to a sixth aspect, there is provided a drivetrain for an electric vehicle. The drivetrain comprises a battery system according to the fifth aspect and an electric traction machine being electrically coupled to the battery system.

The electric traction machine may preferably be an electric traction machine which requires three-phase alternating current from the battery assembly to operate. So to say, the battery system is configured to provide three-phase alternating current to the electric traction machine. Using the method according to the first aspect, the electric traction machine can operate with high efficiency and without disturbance as the change between and within the three-phase current is reduced and/or kept to a minimum.

According to a seventh aspect, there is provided a vehicle. The vehicle comprises a drivetrain of the sixth aspect.

The vehicle according to the seventh aspect runs smoothly and with a high efficiency when operated using the method according to the first aspect. In particular, the same advantages as discussed before apply to the vehicle as well.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic view of a vehicle according to the present disclosure, the vehicle comprising a drivetrain, a battery system, a data processing apparatus, a computer program, and a computer-readable storage medium according to the present disclosure;
- Figure 2: shows a detailed view of a battery system of the vehicle of Fig. 1;
- Figure 3: shows a schematic view of the drivetrain of the vehicle of Fig. 1;
- Figure 4: shows a schematic flow diagram illustrating the steps of a method for operating an inverter unit according to the present disclosure;
- Figure 5A: shows a diagram of a three-phase AC signal in an ideal state;
- Figure 5B: shows a diagram of a three-phase AC signal in a non-ideal state having offsets;
- Figure 6A: shows a diagram of a three-phase AC signal in an ideal state;
- Figure 6B: shows a diagram of a three-phase AC signal in a non-ideal state having difference in current amplitude; and
- Figure 7: shows a measurement of sinusoidal currents of a three-phase sinusoidal current with and without the method for operating an inverter unit according to the present disclosure.

### DETAILED DESCRIPTION

The Figures are merely schematic representations and serve only to illustrate examples of the disclosure. Identical or equivalent elements are in principle provided with the same reference signs.

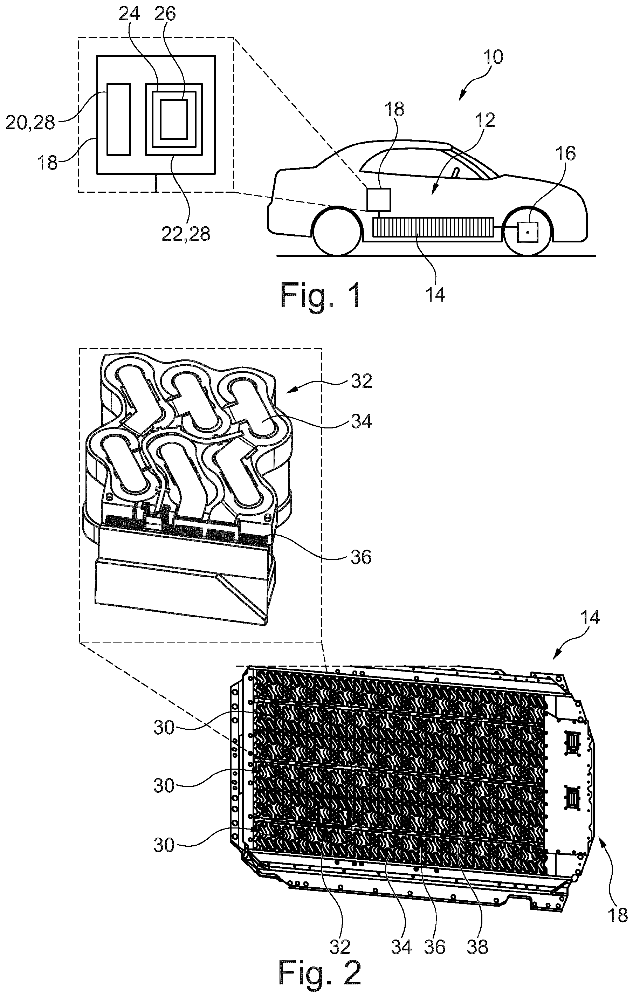

Figure 1 shows a vehicle 10 which comprises a drive train 12.

The drive train 12 comprises a battery system 14 which is electrically coupled to an electric traction machine 16. In particular, the battery system 14 is configured to supply AC power to the electric traction machine 16. In more detail, the electric traction machine 16 is a three-phase electric traction machine for the propulsion of the vehicle 10.

The vehicle 10 further comprises a data processing apparatus 18 which is communicatively coupled to the battery system 14.

The data processing apparatus 18 has a data processing unit 20 and a data storage unit 22.

The data storage unit 22 comprises a computer-readable storage medium 24.

On the computer-readable storage medium 24, there is provided a computer program 26.

The computer-readable storage medium 24 and the computer program 26 comprise instructions which, when executed by the data processing unit 20 or, more generally speaking, a computer, cause the data processing unit 20 or the computer to carry out a method for operating an inverter unit for enabling an alternating current having a current amplitude and a current phase.

Consequently, the data processing unit 20 and the data storage unit 22 form means 28 for carrying out a method for operating an inverter unit for enabling an alternating current having a current amplitude and a current phase.

The battery system 14 is shown in a more detailed view in Fig. 2.

The battery system 14 comprises one or more battery strings 30. The battery strings 30 may be arranged next or adjacent to each other.

Each battery string 30 is configured to provide one phase of an alternating current to supply the electric traction machine 16. In other words, the electric traction machine 16 is electrically coupled with each of the battery strings 30 of the battery system 14.

In the present example, the battery system 14 comprises three battery strings 30, each battery string 30 supplying one phase of the electric traction machine 16 with AC power. Consequently, the battery system 14 provides a three-phase alternating current to supply the electric traction machine 16.

As can be seen further in Fig. 2, each of the battery strings 30 comprises a plurality of battery cell units 32. The battery cell units 32 are electrically coupled with each other in the series.

To be specific, each battery cell unit 32 comprises one or more battery cells 34 which are electrically coupled in series.

Furthermore, each battery cell unit 32 comprises a cell-level inverter unit 36 which may be also be noted herein as inverter unit.

The cell-level inverter unit 36 is configured to convert direct current from the one or more battery cells 34 in alternating current to supply the electric traction machine 16.

For example, the cell-level inverter unit 36 may comprise a PCB or other electronic components (not shown) to convert direct current into alternating current.

The cell-level inverter units 36 are electrically coupled in series with each other via busbars 38.

In other words, each battery string 30 comprises a set of busbars 38 which electrically couples a plurality of cell-level inverter units 36 of the battery cell units 32 in series.

Furthermore, each battery string 30 is electrically coupled to the data processing apparatus 18 arranged at the front side of the battery system 14.

Furthermore, the data processing apparatus 18 is communicatively coupled with each of the cell-level inverter units 36, for example, via a wireless connection such as Bluetooth or Wi-Fi.

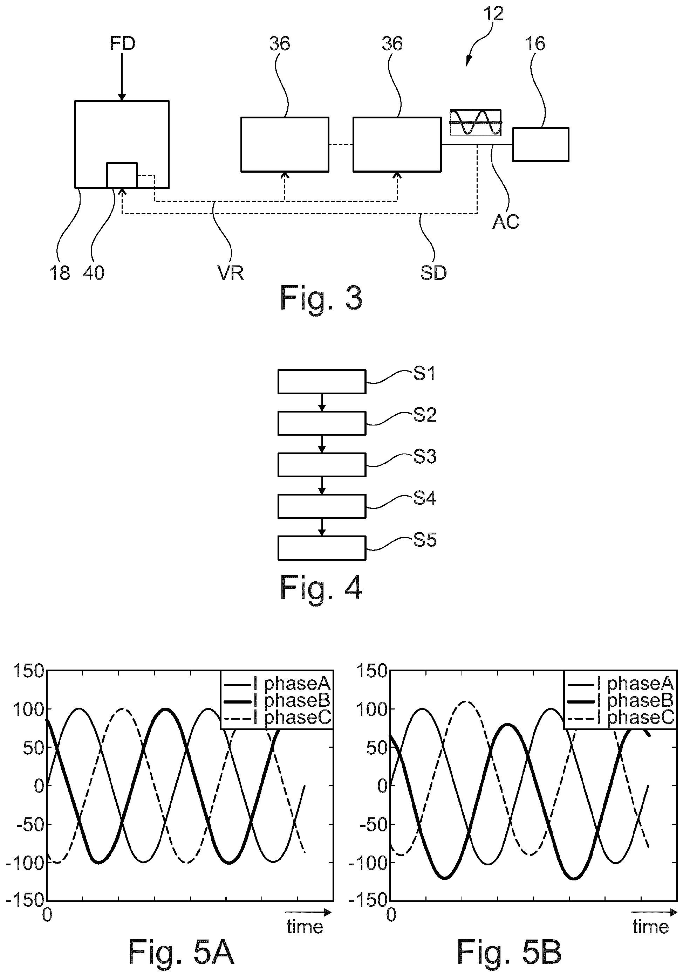

As described above, the battery system 14 is part of the drive train 12 of the vehicle 10. The drive train 12 is shown in more detail in Fig. 3 which is explained in the following in more detail.

Figure 3 shows on the left side the data processing apparatus 18 which is communicatively connected to all cell-level inverter units 36.

The data processing apparatus 18 is configured to request a sinusoidal voltage to be enabled by each of the cell-level inverter units 36. In other words, the data processing apparatus 18 may request one or more or all cell-level inverter units 36 to provide an alternating current based on a requested sinusoidal voltage.

The cell-level inverter units 36 will react thereto by operating their switches accordingly.

In order to be able to provide this request, the data processing apparatus 18 obtains the first data FD indicative of the sinusoidal voltage to be enabled by the cell-level inverter units 36. The first data FD may be obtained from a controller associated with the electric machine 16.

The first data FD is indicative of the sinusoidal voltage to be enabled by the one or more or all cell-level inverter units 36.

The first data FD may comprise one of an associated amplitude, an associated angle, an associated phase and a phase offset of the sinusoidal voltage.

In other words, the first data FD comprises at least one parameter which allows the cell-level inverter unit 36 to enable the sinusoidal voltage. Following the enabled sinusoidal voltage, a sinusoidal current is enabled. This sinusoidal or alternating current is based on the first data FD and is supplied to the electric traction machine 16 which is electrically coupled to the one or more cell-level inverter units 36. The alternating current AC has a current amplitude and a current phase.

The data processing apparatus 18 is further configured to obtain second data SD indicative of a parameter of the alternating current AC actually enabled by the cell-level inverter unit 36.

In other words, the data processing apparatus 18 obtains or receives a measurement comprises by the second data SD and indicative of a parameter of the alternating current AC actually enabled by the cell-level inverter unit 36.

The data processing apparatus 18 is further configured to provide a voltage reference VR to one or more or all cell-level inverter units 36 based on the obtained first data FD and the obtained second data SD.

Based on the voltage reference VR, the first data FD obtained at the data processing apparatus 18 can be corrected and/or adjusted.

To this end, the data processing apparatus 18 may comprise a PI controller 40 which is configured to determine the voltage reference VR.

In particular, the PI controller 40 is configured to determine a scaling factor for correcting the first data FD. This scaling factor is based on the amplitude of the actually enabled current and a predefined reference amplitude. Thus, the voltage reference VR provided to the inverter unit 36 is based on the first data FD which is corrected using the scaling factor.

In addition or alternatively, the PI controller 40 is configured to determine a voltage offset based on an average current actually enabled and a predefined reference average current. The voltage offset is used for correcting the first data. Thus, the voltage reference VR provided to the inverter unit 36 is based on the first data FD which is corrected using the voltage offset.

The method for operating the cell-level inverter unit 36 for enabling an alternating current having a current amplitude and a current phase is described in more detail with reference to Fig. 4.

In a first step S1, first data FD indicative of a sinusoidal voltage to be enabled by the cell-level inverter unit is obtained. This step may be carried out by the data processing apparatus 18.

In a second step S2, second data SD indicative of a parameter of the alternating current actually enabled by the cell-level inverter unit 36 is obtained. This step may be carried out by the data processing apparatus 18.

Subsequently, a third step S3 is carried out which comprises determining the voltage offset based on the average current comprises by the second data and the predefined reference average current. Additionally or alternatively, the scaling factor is determined based on the amplitude of the actually enabled current as comprises by the second data and the predefined reference amplitude. This step may be carried out by the data processing apparatus 18, in particular, by the PI controller 40.

Subsequently, a fourth step S4 is carried out, wherein step S4 comprises correcting the first data FD by the scaling factor and/or the voltage offset. This step may be carried out by the data processing apparatus 18.

In a subsequent fifth step S5, the voltage reference VR is provided to the one or more or all cell-level inverter units 36. The voltage reference VR is based on the obtained first data FD and the obtained second data SD, wherein the first data is corrected using the scaling factor and/or the voltage offset as mentioned above. This step may be carried out by the data processing apparatus 18.

The above steps S1 to S5 may be carried out repeatedly during operating the battery system 14. In particular, the above steps S1 to S5 are carried out in a time interval of 1-5 ms.

The above method allows to minimize and/or to at least reduce undesired changes of the current amplitude and the current offset of the sinusoidal current actually enabled by the cell-level inverter units 36 over time. This is further illustrated with reference to Figs. 5A and 5B.

Figure 5A shows the three sinusoidal current signals. The three current signals are shifted against one another by 120°. Furthermore, each current signal has the same amplitude, namely 100 mA. However, in a dynamic system such as in a drivetrain 12 of a vehicle 10 according to the above disclosure, it may be that changes occur in the actually enabled current over time. This is illustrated in Fig. 5B, wherein one of the sinusoidal current signals is offset towards higher currents and one of the sinusoidal current signals is offset towards lower currents. Using the above method for operating the cell-level inverter unit 36, such offsets may be reduced or eliminated.

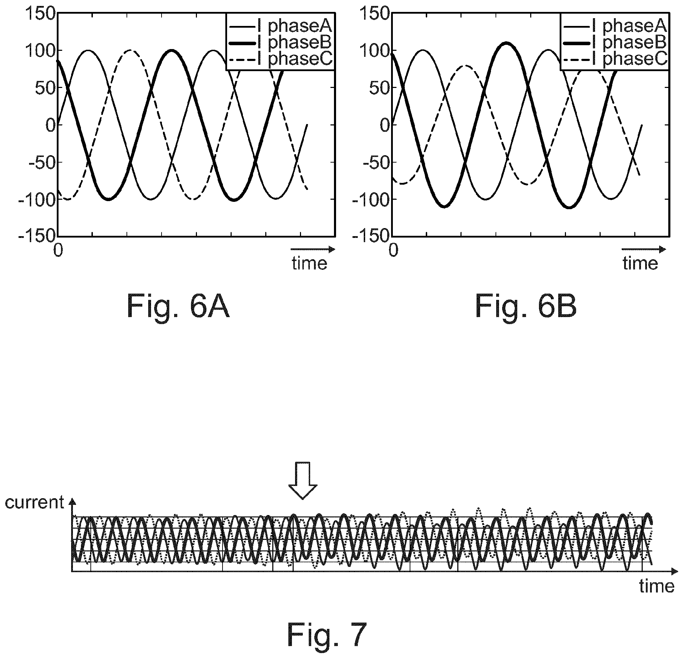

Figure 6A shows the same sinusoidal current signals as Figure 5AHowever, in the dynamic system such as in a drivetrain 12 of a vehicle 10 according to the above disclosure, it may be that changes occur in the actually enabled current occur over time. This is illustrated in Fig. 6B, wherein one of the sinusoidal current signals has an amplitude which is increased with respect to the amplitude of 100mA as shown in Figure 6A and another one of the sinusoidal current signals has an amplitude which is reduced with respect to the amplitude of 100mA as shown in Figure 6A. Using the above method for operating the cell-level inverter unit 36, this effect may be mitigated or eliminated.

Further reference is made to Fig. 7 which shows real measurements of a three-phase alternating current supplying an electric traction machine over time. The electric traction machine operates at a constant speed. As can be seen in the beginning of the measurement on the left side, the three current signals have slightly different amplitudes. This is because the amplitude is not corrected in this measurement using the method for operating the inverter unit of the disclosure. However, the offsets of each of the current signals is corrected using the method for operating the inverter unit according to the present disclosure. Thus, there is substantially no offset at the beginning of the measurement. At the time stamp marked with an arrow, the method for operating the cell inverter unit, in particular correcting the offset, is deactivated. As can be seen from the further developments of the three current signals, these signals start to become offset, wherein the offset tends to increase over time. These offsets may impact the electrical performance of the electric traction machine.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: drive train
- 14: battery system
- 16: electric traction machine
- 18: data processing apparatus
- 20: data processing unit
- 22: data storage unit
- 24: computer-readable storage medium
- 26: computer program
- 28: means for carrying out the method
- 30: battery strings
- 32: battery cell units
- 34: battery cells
- 36: cell-level inverter unit
- 38: busbar
- 40: controller
- FD: first data
- SD: second data
- AC: alternating current
- VR: voltage reference
- S1: first step
- S2: second step
- S3: third step
- S4: fourth step
- S5: fifth step

## Claims

1. A method for operating an inverter unit (36) for enabling an alternating current (AC) having a current amplitude and a current phase, the method comprising:
- obtaining (S1) first data (FD) indicative of a sinusoidal voltage to be enabled by the inverter unit (36),
- obtaining (S2) second data (SD) indicative of a parameter of the alternating current (AC) actually enabled by the inverter unit (36),
- providing (S4) a voltage reference (VR) to the inverter unit (36) based on the obtained first data (FD) and the obtained second data (SD).

2. The method according to claim 1, wherein the sinusoidal voltage to be enabled by the inverter unit (36) is indicative of one or more of an associated amplitude, an associated angle, an associated time, an associated phase offset and an associated phase.

3. The method according to claim 1 or 2, wherein the parameter of the alternating current (AC) actually enabled by the inverter unit (36) is an average current.

4. The method of claim 3, further comprising correcting (S5) the first data (FD) by a voltage offset based on the average current in order to provide the voltage reference (VR) to the inverter unit (36).

5. The method of claim 4, further comprising determining (S3) the voltage offset using a PI controller (40) based on the average current and a predefined reference average current.

6. The method of claim 5, wherein the predefined reference average current is zero.

7. The method according to any one of the preceding claims, wherein the parameter of the alternating current actually enabled by the inverter unit (36) is an amplitude.

8. The method of claim 7, further comprising correcting the first data (FD) by a scaling factor based on the amplitude in order to provide the voltage reference to the inverter unit (36).

9. The method of claim 8, further comprising determining (S3) the scaling factor using a PI controller (40) based on the amplitude and a predefined reference amplitude.

10. A data processing apparatus (18) comprising means for carrying out the method of any one of the preceding claims.

11. A computer program (26) comprising instructions which, when the computer program (26) is executed by a computer, cause the computer to carry out the method of claims 1 to 9.

12. A computer-readable storage medium (24) comprising instructions which, when executed by a computer, cause the computer to carry out the method of claims 1 to 9.

13. A battery system (14) comprising a plurality of battery cell units (32) each battery cell unit (32) comprising one or more battery cells (34) and a cell-level inverter unit (36) which is electrically connected to the one or more battery cells (34), and a data processing apparatus (18) according to claim 9, wherein the data processing apparatus (18) is communicatively coupled to at least one of the cell-level inverter units (36).

14. A drivetrain (12) for an electric vehicle (12), comprising a battery system (14) according to claim 13 and an electric traction machine (16) being electrically coupled to the battery system (14).

15. A vehicle (10) comprising a drivetrain of claim 14.
